# EUROPÄISCHE PATENTSCHRIFT

(11) **EP 3 887 186 B1**
(45) Veröffentlichungstag und Bekanntmachung des Hinweises auf die Patenterteilung: **20.09.2023**
(21) Anmeldenummer: 19805556.8
(22) Anmeldetag: 07.11.2019
(51) Int. Cl.: B60K 1/00, B60K 5/04, B60K 5/12

(54) **AGGREGATELAGERUNG**
UNIT MOUNTING
SYSTÈME DE MONTAGE D'UNITÉ SUR PALIERS

(30) Priorität: 30.11.2018 DE 102018220728
(43) Veröffentlichungstag der Anmeldung: 06.10.2021
(73) Patentinhaber: Audi AG, 85045 Ingolstadt (DE)
(72) Erfinder: SCHANTL, Gilbert, 80802 München (DE)
(86) Internationale Anmeldenummer: PCT/EP2019/080548
(87) Internationale Veröffentlichungsnummer: WO 2020/108946

(56) Entgegenhaltungen:
- EP-A1- 3 369 645
- EP-A1- 3 539 808
- DE-A1-102009 040 896
- US-A1- 2017 057 550

## Beschreibung

Die Erfindung betrifft eine Aggregatelagerung für ein Antriebsaggregat eines elektrischen Kraftfahrzeugs gemäß der im Oberbegriff des Patentanspruches 1 angegebenen Art.

Das Antriebsaggregat eines elektrischen Fahrzeugs ist üblicherweise im Bereich einer oder mehrerer Achsen, zwischen den Antriebsrädern angeordnet und über schwingungsdämpfende Aggregatelager sowie Aggregatestützen, die zum Teil sich über große Hebelarmlängen erstreckende, materialintensive Tragarme aufweisen, an einer Tragstruktur des Fahrzeugaufbaus gelagert. Insbesondere kann das Antriebsaggregat auf einem Hilfsrahmen abgestützt sein, der die Verbindung zwischen dem Antriebsaggregat und der Karosserie bildet.

Bei Aggregatelagerungen besteht grundsätzlich ein Zielkonflikt in der Aggregatelager-Abstimmung hinsichtlich Schwingungen und Körperschalleintrag in die Karosserie. Schwingungen werden durch möglichst steife Lager gemindert, wohingegen Körperschalleintrag durch weiche Lager gemindert wird.

Konstruktionsbedingt eignen sich drei Punkte am Antriebsaggregat zur Anbindung des Antriebsaggregats, weswegen das Antriebsaggregat in der Regel mittels einer statisch bestimmten Dreipunktlagerung gelagert ist. Ein Problem der Dreipunktlagerung besteht darin, dass für das Antriebsaggregat aufgrund der wenigen Lagerstellen nur geringe Dämpfung erzielbar ist, was zu schwingungssteigernden Komforteinbußen führt.

Um eine höhere Dämpfung zu erzielen, kann das Antriebsaggregat auch in einer Vierpunktlagerung, beispielsweise über zwei vordere und zwei hintere Aggregatelager, abgestützt sein. Eine Vierpunktlagerung ermöglicht bei zunehmender Motorleistung und damit verbundenen hohen Drehmomenten der Antriebsaggregate einen höheren Komfort im Fahrgestell sowie bessere akustische Isolation der Motor-Getriebe-Einheit, da jedes Lager eine geringere Last trägt. Durch die konstruktive Auslegung des Antriebsaggregats ergeben sich drei steife Strukturen, die sich als aggregatseitige Anbindungspunkte eignen aufgrund ihrer Nähe zum Hilfsrahmen. Der vierte Anbindungspunkt muss jedoch über eine längere aggregatseitige Stütze verstärkt werden, die zu einer Erhöhung des Gewichts führt.

Aus der DE 10 2012 012 327 A1 ist eine Anordnung einer Elektromotoreneinheit in einem Fahrzeug bekannt. Die Elektromotoreinheit ist über zumindest zwei Aggregateträger an der Karosserie und an einem Achsträger befestigt. Die achsträgerseitigen befestigten Aggregatelager sind über Motorstützen am Antriebsaggregat (bzw. Elektromotoreinheit) angebunden. Eines der Aggregatelager ist am Motordeckel/Gehäuse der Elektromotoreinheit befestigt, während das andere Aggregatelager an einem Getriebegehäuse befestigt ist.

Aus der DE 10 2015 016 390 A1 ist eine Aggregatelagerung bekannt bei der ein Elektromotor über eine Vierpunktlagerung am Hilfsrahmen abgestützt ist. Hierzu sind an den vorderen Knotenelementen des Hilfsrahmens vordere Aggregatelager und am hinteren Knotenelement hintere Aggregatelager ausgebildet, die jeweils mit Aggregatestützen verschraubt sind.

Die DE 10 2009 040 896 A1 offenbart eine Anordnung zur Befestigung einer Antriebsbaugruppe, umfassend einen Elektromotor sowie ein mit demselben drehfestverbundenes Getriebe, im Motorraum eines Fahrzeugs. Dabei ist die Antriebsbaugruppe quer eingebaut und unterhalb eines sich an seitlichen Längsträgern der Fahrzeugkarosserie des Fahrzeugs abstützenden Querträgers angeordnet und mittels eines ersten und eines zweiten Aggregatlagers hängend an demselben gelagert. Die beiden Aggregatlager sind, in Fahrzeuglängsrichtung (X-Richtung) gesehen, zumindest annähernd auf der gleichen X-Koordinaten des Fahrzeugs angeordnet. Ferner ist der Antriebsbaugruppe eine Pendelstütze zugeordnet, welche einenends am Getriebe und anderenends unmittelbar oder mittelbar an der Fahrzeugkarosserie abgestützt ist, wobei die Achse der Pendelstütze, in Fahrzeugquerrichtung (Y-Richtung) gesehen, zumindest annähernd auf der gleichen Y-Koordinate des Fahrzeugs wie das die Verbindung zwischen dem Getriebe und dem Querträger bewerkstelligende zweite Aggregatlager angeordnet ist.

Die US2017/057550 A1 offenbart eine Antriebseinheit-Montagestruktur eines Fahrzeugs, umfassend eine Antriebseinheit, einen Hilfsrahmen, der in Fahrzeughöhenrichtung unterhalb der Antriebseinheit angeordnet ist, und mindestens eine Befestigungshalterung zum Befestigen der Antriebseinheit am Hilfsrahmen. Die Antriebseinheit weist einen Arm auf, der sich von ihrem Hauptkörperabschnitt zu der Befestigungshalterung erstreckt. Ein Spitzenabschnitt des Arms ist axial auf einem Paar von Wellenstützabschnitten der Befestigungshalterung mit einem Wellenelement, das sich in Breitenrichtung des Fahrzeugs erstreckt, abgestützt. Die Befestigungshalterung weist zerbrechliche Abschnitte auf, die bei einem Aufprall brechen, so dass sich der Arm der Antriebseinheit in die vordere Richtung verschiebt.

EP 3 369 645 A1 betrifft einen Hilfsrahmen für ein Kraftfahrzeug, mit beabstandet voneinander verlaufenden Längsträgern, mindestens einem die Längsträger miteinander verbindenden Querträger und Verstärkungselementen, die mit den Längsträgern und dem Querträgerverbunden und aus Metallblech gefertigt sind. Damit ein solcher Hilfsrahmen bei relativ geringem Gewicht eine hohe Dauerschwingfestigkeit bietet, sind die Verstärkungselemente aus einem ersten Verstärkungselement und einem zweiten Verstärkungselement zusammengesetzt, die als gebogene Schalen ausgeführt sind und einander überlappende Enden aufweisen, wobei die überlappenden Enden mit dem Querträger oder einem der Längsträger stoffschlüssig verbunden, vorzugsweise verschweißt, sind.

Der Erfindung liegt die Aufgabe zu Grunde, eine Aggregatelagerung gemäß der im Oberbegriff der Patentanspruches 1 angegebenen Art derart weiterzubilden, dass eine gewichtsparende Optimierung der Anbindung des Antriebsaggregats erzielt ist.

In bekannter Art und Weise umfasst eine Aggregatelagerung für ein Antriebsaggregat eines elektrischen Kraftfahrzeugs zumindest ein erstes Aggregatelager sowie ein zweites Aggregatelager, wobei die Aggregatelager in Fahrzeugquerrichtung beabstandet zueinander an einem Hilfsrahmen angeordnet sind und die Aggregatelager das Antriebsaggregat jeweils über eine Aggregatestütze abstützen.

Das Antriebsaggregat ist beispielsweise als eine Elektromaschine, umfassend einen Elektromotor, ein Getriebe sowie ein Differential, ausgebildet. Zur Schwingungstilgung ist das Antriebsaggregat über dämpfende Aggregatelager unter Zwischenschaltung von Aggregatestützen am Hilfsrahmen abgestützt. Zumindest ein erstes sowie ein zweites Aggregatelager sind in Fahrzeugquerrichtung beabstandet zueinander am Hilfsrahmen angeordnet, wobei der Hilfsrahmen zwei in Fahrzeuglängsrichtung seitlich angeordnete Längsträger aufweist, die an ihren vorderen und hinteren Knotenelementen jeweils über einen Querträger miteinander verbunden sind. Der Hilfsrahmen dient als Verbindung zwischen dem Antriebsaggregat und der Fahrzeugkarosserie.

Konstruktionsbedingt weist das Antriebsaggregat zwei geeignete Anbindungspunkte am Gehäuse des Getriebes auf, das je nach Ausführung des Antriebsaggregates und Anordnung von Elektromotor und Differential zueinander in unmittelbarer Nähe des jeweils einen Querträgers des Hilfsrahmens liegt. Die Anbindungspunkte am Getriebegehäuse sind jeweils über ein erstes Aggregatelager sowie ein in Fahrzeugquerrichtung dazu beabstandetes zweites Aggregatelager am Hilfsrahmen abgestützt.

Das Gehäuse des Differentials sowie das Gehäuse des Elektromotors sind am jeweils anderen Querträger angeordnet. Beide weisen konstruktionsbedingt jeweils einen geeigneten Anbindungspunkt auf, wobei das Gehäuse des Differentials hilfsrahmennah über ein erstes Aggregatelager am Hilfsrahmen abgestützt ist, und das Gehäuse des Elektromotors über ein in Fahrzeugquerrichtung zum ersten Aggregatelager beabstandetes zweites Aggregatelager am Hilfsrahmen abgestützt ist. Der Anbindungspunkt am Gehäuse des Differentials ist hilfsrahmennah am ersten Aggregatelager angeordnet, wohingegen der Anbindungspunkt des Motorgehäuses einen größeren Abstand zum Hilfsrahmen aufweist. Herkömmlich stützt das zweite Aggregatelager das Antriebsaggregat, insbesondere den Elektromotor, unter Zwischenschaltung einer materialintensiven Aggregatestütze schwingungssteif am Hilfsrahmen ab.

Dabei sind das erste Aggregatelager und das zweite Aggregatelager asymmetrisch zueinander, d.h. in Fahrzeughoch- sowie in Fahrzeuglängsrichtung zueinander versetzt, an einem Querträger des Hilfsrahmens angeordnet. Je nach Ausführung des Elektromotors und nach Anordnung von Motor und Differential zueinander, kann die Asymmetrie des ersten und des zweiten Aggregatelagers entweder am vorderen oder am hinteren Querträger ausgebildet sein. Insbesondere ist das zweite Aggregatelager, unabhängig von einer symmetrischen Anordnung relativ zum ersten Aggregatelager, derart am Hilfsrahmen angeordnet, dass es einen möglichst kurzen Abstand zu dem jeweiligen abzustützenden, antriebseitigen Anbindungspunkt aufweist. Hierdurch ist in vorteilhafter Weise eine materialintensive Verstärkung des jeweiligen Anbindungspunktes, beispielsweise über eine mit längeren Hebelarmen ausgebildete Aggregatestütze, die eine Erhöhung des Gewichts an der Lagerstelle verursacht, vermeidbar.

Erfindungsgemäß weisen das asymmetrische erste und zweite Aggregatelager jeweils eine Lagerachse auf, wobei die jeweiligen Lagerachsen in Fahrzeughochrichtung sowie in Fahrzeuglängsrichtung, ausgehend von einem beliebigen zentralen Punkt, versetzt zueinander angeordnet sind. Durch die vertikal zueinander versetzten Lagerachsen ist es möglich, dass das asymmetrische erste und zweite Aggregatelager gemäß ihrer jeweiligen Lagerkennlinien und der Schwerpunktlage des Antriebsaggregats eine entsprechend unterschiedliche Höhenlage am Hilfsrahmen einnehmen. Hierdurch bieten die beiden asymmetrischen Aggregatelager bei einer Gewichtsverlagerung des Antriebsaggregats eine besser verteilte Auflagefläche und mehr Stabilität im Vergleich zu einer herkömmlichen symmetrischen Anordnung der jeweiligen Aggregatelager.

Durch die horizontal und vertikal zueinander versetzten Lagerachsen, ist es möglich, dass sowohl das asymmetrische erste Aggregatelager als auch zweite Aggregatelager nah an den gegebenen steifen Anbindungsstrukturen des Antriebsaggregats positioniert ist. Insbesondere die unmittelbare Nähe des zweiten Aggregatelagers zum jeweiligen Anbindungspunkt am Motorgehäuse des Antriebsaggregat ermöglicht eine steife Anbindung des Antriebsaggregates ohne Zwischenschaltung einer materialintensiven Aggregatestütze, die eine erhebliche Gewichtserhöhung zur Folge hat.

Die erfindungsgemäße Aggregatelagerung zeichnet sich zudem dadurch aus, dass der Querträger eine erste Lageraufnahme sowie eine zweite Lageraufnahme zur jeweiligen Aufnahme des asymmetrischen ersten und zweiten Aggregatelagers aufweist. Der Querträger stellt steife Flächen bereit, an denen die beiden Lageraufnahmen positionierbar sind. Hierdurch sind die jeweiligen Aggregatelager bauteilsteif in die Lageraufnahmen einsetzbar.

Zudem ist erfindungsgemäß vorgesehen, dass die erste Lageraufnahme und die zweite Lageraufnahme jeweils an den Endbereichen des Querträgers angeordnet sind. Der Hilfsrahmen weist zwei seitliche Längsträger auf, die an vorderen und hinteren Knotenelementen jeweils über einen vorderen und hinteren Querträger verbunden sind. Die Eckbereiche des Hilfsrahmens weisen eine hohe Bauteilsteifigkeit auf. In vorteilhafter Weise ermöglichen die an den bauteilsteifen Endbereichen des Querträgers angeordneten Lageraufnahmen eine steife Anordnung des asymmetrischen ersten und zweiten Aggregatelagers.

Gemäß einer bevorzugten Ausführungsform sind das asymmetrische erste und zweite Aggregatelager in Fahrzeuglängsrichtung am vorderen Querträger des Hilfsrahmens angeordnet. Je nach Ausführung des Elektromotors und nach Anordnung von Motor und Differential zueinander, sind der Elektromotor und das Differential am vorderen Querträger des Hilfsrahmens angeordnet, wobei der Anbindungspunkt des Differentials im Gegensatz zum Anbindungspunkt des Motors hilfsrahmennah am vorderen Querträger angeordnet ist. Das zweite Aggregatelager ist asymmetrisch zum ersten Aggregatelager am Hilfsrahmen angeordnet. Hierdurch weist das zweite Aggregatelager einen möglichst kurzen Abstand zu dem jeweiligen abzustützenden, antriebseitigen Anbindungspunkt am Motorgehäuse auf. In vorteilhafter Weise ist eine materialintensive Verstärkung des jeweiligen Anbindungspunktes, beispielsweise über eine mit längeren Hebelarmen ausgebildete Aggregatestütze, die eine Erhöhung des Gewichts an der Lagerstelle verursacht, vermeidbar.

Gemäß einer alternativen Ausführungsform sind das asymmetrische erste und zweite Aggregatelager in Fahrzeuglängsrichtung am hinteren Querträger des Hilfsrahmens angeordnet. Je nach Ausführung des Elektromotors und nach Anordnung von Motor und Differential zueinander, sind der Elektromotor und das Differential am hinteren Querträger des Hilfsrahmens angeordnet, wobei der Anbindungspunkt des Differentials im Gegensatz zum Anbindungspunkt des Motors hilfsrahmennah am hinteren Querträger angeordnet ist. Die asymmetrische Anordnung des zweiten Aggregatelagers relativ zum ersten Aggregatelager ermöglicht einen kurzen Abstand zwischen dem zweiten Aggregatelager und dem jeweiligen abzustützenden, antriebseitigen Anbindungspunkt am Motorgehäuse auf. Dadurch ist in vorteilhafter Weise eine materialintensive Verstärkung des jeweiligen Anbindungspunktes, beispielsweise über eine mit längeren Hebelarmen ausgebildete Aggregatestütze, die eine Erhöhung des Gewichts an der Lagerstelle verursacht, vermeidbar.

Vorzugsweise ist das Antriebsaggregat über zwei hintere Aggregatelager an einem hinteren Querträger und/oder an den hinteren Knotenelementen des Hilfsrahmens abgestützt. Der Hilfsrahmen dient zur Verbindung des Antriebsaggregats mit dem Fahrzeugaufbau, wobei das Antriebsaggregat über vier annähernd gleich ausgebildete Aggregatelager, die eine ähnliche Steifigkeit aufweisen, abgestützt ist. Im Vergleich zu den Aggregatelagern einer herkömmlichen Dreipunktlagerung weisen die vier Aggregatelager jeweils eine niedrigere Gewichtslast auf, weil die Auflagefläche des Antriebsaggregats besser verteilt ist. Dadurch ist es möglich weichere Aggregatelager einzusetzen, um eine bessere Lagerabstimmung hinsichtlich Schwingungen und Körperschalleintrag zu ermöglichen. Durch die erfindungsgemäße Aggregatelagerung ist eine höhere Dämpfung, die einen höheren Komfort zur Folge hat, erzielbar.

Bevorzugt weisen der hintere Querträger und/oder die hinteren Knotenelemente des Hilfsrahmens Lageraufnahmen zur Aufnahme der hinteren Aggregatelager auf. Zur Erhöhung der Bauteilsteifigkeit ist es vorgesehen, dass die hinteren Lageraufnahmen nahe den steifen Ecken des Hilfsrahmens am Querträger und/oder an den eine hohe Steifigkeit aufweisenden Knotenelementen angeordnet sind.

In einer alternativen Ausführungsform ist das Antriebsaggregat über zwei vordere Aggregatelager an einem vorderen Querträger und/oder an den vorderen Knotenelementen des Hilfsrahmens abgestützt. Hierdurch ist das Antriebsaggregat über vier annähernd gleich ausgebildete Aggregatelager mit ähnlicher Steifigkeit abgestützt, die im Vergleich zu den Aggregatelagern einer herkömmlichen Dreipunktlagerung aufgrund der besser verteilten Auflagefläche des Antriebsaggregats eine niedrigere Gewichtslast aufweisen. Die erfindungsgemäße Aggregatelagerung bewirkt eine höhere Dämpfung und einen höheren Komfort, da es möglich ist weichere Aggregatelager einzusetzen, die eine bessere Lagerabstimmung hinsichtlich Schwingungen und Körperschalleintrag ermöglichen.

Bevorzugt weisen der vordere Querträger und/oder die vorderen Knotenelemente des Hilfsrahmens Lageraufnahmen zur Aufnahme der vorderen Aggregatelager auf. Zur Erhöhung der Bauteilsteifigkeit ist es vorgesehen, dass die vorderen Lageraufnahmen nahe den steifen Ecken des Hilfsrahmens am Querträger und/oder an den eine hohe Steifigkeit aufweisenden Knotenelementen angeordnet sind.

Gemäß einer Ausführungsform sind die Lageraufnahmen einteilig mit dem Hilfsrahmen ausgebildet. Der Hilfsrahmen, umfassend die Lageraufnahmen, kann beispielsweise aus einem Gussteil gefertigt sein. Dadurch ist eine kostengünstige Serienfertigung ermöglicht.

Gemäß einer alternativen Ausführungsform sind die Lageraufnahmen als auf dem Hilfsrahmen vormontierte Einzelteile ausgebildet. Es ist denkbar, dass die Lageraufnahmen entweder auf den Hilfsrahmen angeschraubt und/oder angeschweißt sind. Hierdurch ist eine flexible Gestaltung der Anordnung der Lageraufnahmen möglich.

Weitere Vorteile und Anwendungsmöglichkeiten der vorliegenden Erfindung ergeben sich aus der nachfolgenden Beschreibung in Verbindung mit den in der Zeichnung dargestellten Ausführungsbeispielen.

In der Zeichnung bedeutet:
- Fig. 1: eine raumbildliche Ansicht von schräg oben auf eine erfindungsgemäße Aggregatelagerung eines Antriebsaggregats, das auf einem Hilfsrahmen abgestützt ist;
- Fig. 2: eine schematische Darstellung von oben auf eine erfindungsgemäße Aggregatelagerung eines Antriebsaggregats; und
- Fig. 3: eine Ansicht einer erfindungsgemäßen Aggregatelagerung dargestellt mit einem Hilfsrahmen und ohne Antriebsaggregat.

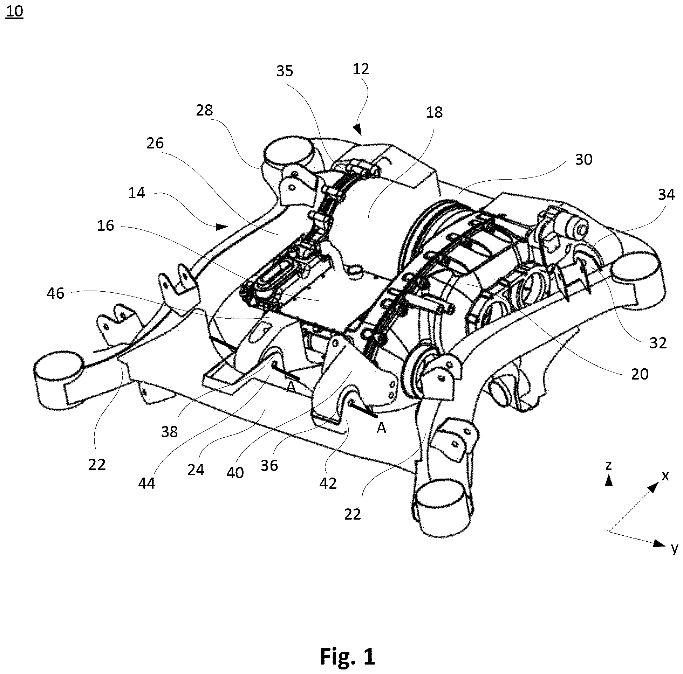

Fig. 1 bis Fig. 3 zeigen eine insgesamt mit der Bezugsziffer 10 bezeichnete Aggregatelagerung für ein Antriebsaggregat eines elektrischen Fahrzeugs.

In Fig. 1 ist eine perspektivische schematische Ansicht einer erfindungsgemäßen Aggregatelagerung 10 eines Antriebsaggregats 12 dargestellt, das unter Bildung einer Vierpunktlagerung an einem Hilfsrahmen 14 gelagert ist. Das vorliegend beispielhaft und für leichtere Verständlichkeit skizzierte Antriebsaggregat 12 ist als Elektromaschine ausgebildet, umfassend einen Elektromotor 16, ein Getriebe 18 und ein Differential 20.

Der Hilfsrahmen 14 weist in Fahrzeuglängsrichtung x vorne zwei seitliche Knotenelemente 22 auf, die über einen vorderen Querträger 24 miteinander verbunden sind. Die beiden vorderen Knotenelemente 22 sind über seitliche Längsträger 26 in Fahrzeuglängsrichtung x nach hinten verlängert. An hinteren Knotenelementen 28 laufen sie mit einem hinteren Querträger 30 zusammen.

Vorliegend ist an den hinteren Knotenelementen 28 jeweils eine Lageraufnahme 32, 33 vorgesehen zur Aufnahme von jeweils einem hinteren Aggregatelager 34, 35, wobei die beiden hinteren Aggregatelager 34, 35 etwa in einer Höhenebene liegen. Das Antriebsaggregat 12 weist am Gehäuse des Getriebes 18 zwei steife Anbindungspunkte auf, die vorliegend über die hinteren Aggregatelager am Hilfsrahmen 14 abgestützt sind.

Am vorderen Querträger 24 sind ein erstes Aggregatelager 36 sowie ein zweites Aggregatelager 38 vorgesehen. In Fahrzeuglängsrichtung x vorne ist das Differential 20 des Antriebsaggregats 12 über das erste Aggregatelager 36 unter Zwischenschaltung einer Aggregatestütze 40 abgestützt. Das Gehäuse des Elektromotors 16, das einen größeren Abstand zum Hilfsrahmen 14 aufweist als das Gehäuse des Differentials 20, ist über das zweite vordere Aggregatelager 38 auf dem Hilfsrahmen 14 abgestützt.

Erfindungsgemäß ist das zweite vordere Aggregatelager 38 asymmetrisch zum ersten Aggregatelager 36 angeordnet. Insbesondere sind die beiden vorderen Aggregatelager 36, 38 in Fahrzeughochrichtung z sowie in Fahrzeuglängsrichtung y zueinander versetzt am Hilfsrahmen 14 angeordnet. Durch die vertikal zueinander versetzten Lagerachsen A der beiden Aggregatelager 36, 38 ist es möglich, dass das erste Aggregatelager 36 sowie das zweite Aggregatelager 38 gemäß ihrer jeweiligen Lagerkennlinien und der Schwerpunktlage des Antriebsaggregats 12 eine entsprechend unterschiedliche Höhenlage am Hilfsrahmen 14 einnehmen.

Vorliegend stellt der vordere Querträger 24 an seinen steifen Endbereichen eine Montagefläche zur Anordnung von Lageraufnahmen 42, 44 bereit, in die das erste Aggregatelager 36 und das zweite Aggregatelager 38 jeweils aufgenommen sind. Die erste Lageraufnahme 42 liegt im eingebauten Zustand des Hilfsrahmens 14 auf der nach oben gerichteten Fläche des Querträgers 24 auf, wohingegen die zweite Lageraufnahme 44 bauraumgünstig an der Rückseite des vorderen Querträgers 24 in Richtung Antriebsaggregat 12 positioniert ist. Hierdurch bieten die beiden vorderen asymmetrischen Aggregatelager 36, 38 bei einer Gewichtsverlagerung des Antriebsaggregats 12 eine besser verteilte Auflagefläche und mehr Stabilität im Vergleich zu einer herkömmlichen, symmetrischen Anordnung der vorderen Aggregatelager 36, 38.

Durch die unterschiedliche vertikale sowie horizontale Anordnung der jeweiligen Lageraufnahmen 42, 44 am Hilfsrahmen 14 sind die jeweiligen Lagerachsen A des eingesetzten asymmetrischen ersten und zweiten Aggregatelagers 36, 38 in Fahrzeughochrichtung z sowie in Fahrzeuglängsrichtung y versetzt zueinander angeordnet. Vorliegend ist die Lagerachse A des ersten Aggregatelagers 36 in Flucht mit der Erstreckungsrichtung des Querträgers 24 ausgerichtet und in Fahrzeughochrichtung z über dem Querträger 24 angeordnet. Die Lagerachse A des zweiten Aggregatelagers 38 ist nahezu auf der gleichen Vertikalhöhe wie der Querträger 24 angeordnet. In Fahrzeughochrichtung z liegt sie im Wesentlichen in der Ebene des Querträgers 24.

Die zweite Lageraufnahme 44 ist bauraumgünstig derart am Querträger 24 angeordnet, dass das eingesetzte zweite Aggregatelager 38 antriebseitig nah an einer Anbindungsstruktur des Gehäuses des Motors 16 positioniert ist. Hierdurch ist eine gewichtserhöhende Verstärkung des zweiten Aggregatelagers 38 durch eine materialintensive Aggregatestütze 46 vermeidbar.

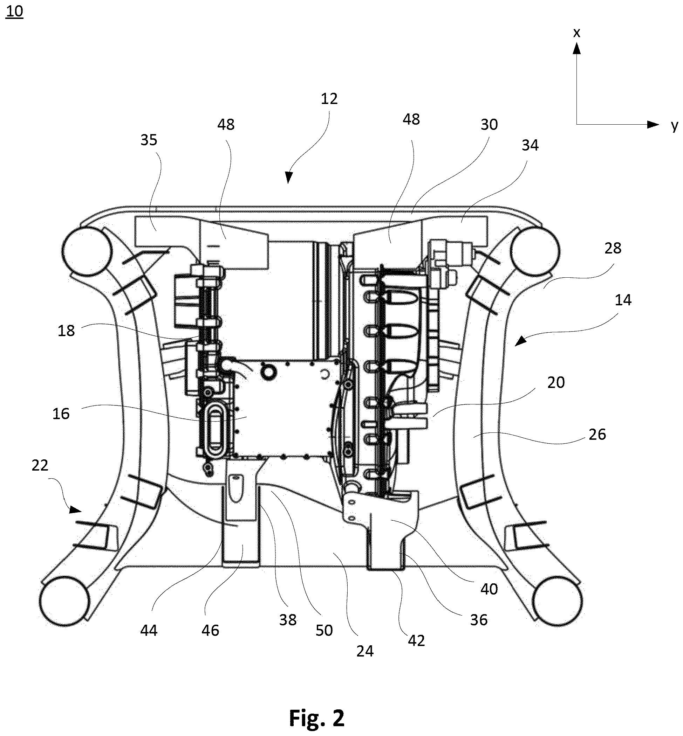

Fig. 2 stellt eine erfindungsgemäße Aggregatelagerung 10 eines Antriebsaggregats 12 an einem Hilfsrahmen 14 von oben dar. Der Hilfsrahmen 14 umfasst zwei in Fahrzeuglängsrichtung x angeordnete seitliche Längsträger 26, die an den vorderen und hinteren Knotenelementen 22, 28 jeweils mit einem Querträger 24, 30 miteinander verbunden sind. Gut zu erkennen ist die symmetrische Anordnung der beiden hinteren Aggregatelager 34, 35, die in Fahrzeugquerrichtung y beabstandet zueinander am Hilfsrahmen 14 angeordnet sind. Die über die hinteren Aggregatelager 34, 35 angeordneten Aggregatestützen 48 sind jeweils mit einem Anbindungspunkt des Gehäuses des Getriebes 18 verbunden.

Die beiden vorderen Aggregatelager 36, 38 sind jeweils in einer Lageraufnahme 42, 44 auf dem vorderen Querträger 24 des Hilfsrahmens 14 eingesetzt. Unter Zwischenschaltung einer jeweiligen Aggregatestütze 40, 46, stützt das erste Aggregatelager 36 das Gehäuse des Differentials 20 auf dem Hilfsrahmen 14 ab, wohingegen das zweite Aggregatelager 38 mit dem Anbindungspunkt des Gehäuses des Motors 16 verbunden ist.

Vorliegend ist der vordere Querträger 24 in Richtung Antriebsaggregat 12 zu einem Flansch 50 tiefgezogen. Das ermöglicht, dass der Hilfsrahmen 14 dem zweiten Aggregatelager 38 entgegenkommt, um dieses näher an den steifen Anbindungspunkt des Antriebsaggregats 12 anzuordnen. Dabei stützt sich die Lageraufnahme 44 des zweiten Aggregatelagers 38 auf dem tiefgezogenen Flansch 50 ab. Vorliegend ist der Flansch 50 einseitig am vorderen Querträger 24 ausgebildet, um mit seiner ausreichend großen Fläche als lokale Versteifung des zweiten Aggregatelagers 38 zu dienen. Hierdurch ist eine materialintensive und gewichtserhöhende Aggregatestütze 46 am zweiten Aggregatelager 38 vermeidbar.

Ferner kann der Hilfsrahmen 14 eine durch die Asymmetrie der vorderen Aggregatelager 36, 38 verursachte Gewichtsverlagerung ausgleichen. Dieser Ausgleich der Gewichtsverlagerung ist gewichtsneutral am Hilfsrahmen 14 erzielbar, beispielsweise indem der Hilfsrahmen 14, wie oben beschrieben, einen tiefgezogenen Flansch 50 am vorderen Querträger 24 aufweist.

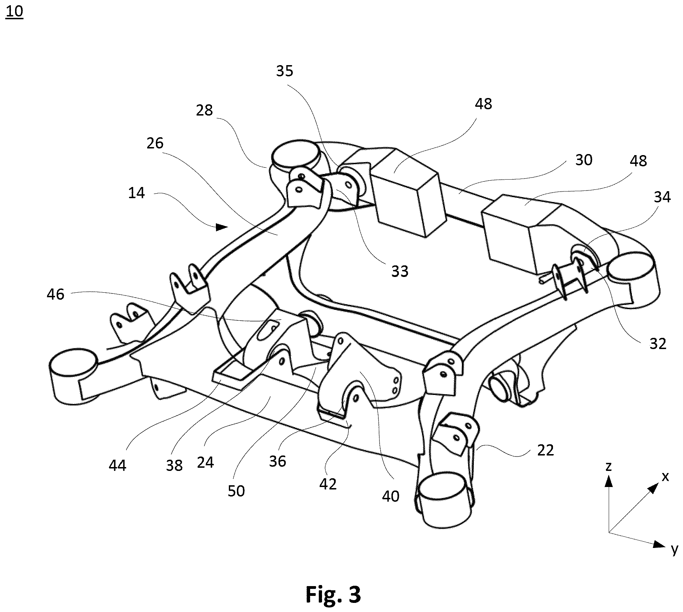

In Fig. 3 ist die erfindungsgemäße Aggregatelagerung 10 angeordnet an einen Hilfsrahmen 14 ohne das Antriebsaggregat gezeigt. Die beiden hinteren Aggregatelager 34, 35 sind in Fahrzeugquerrichtung y beabstandet zueinander am Hilfsrahmen 14 angeordnet. Vorliegend sind die Lageraufnahmen 32, 33 der jeweiligen hinteren Aggregatelager 34, 35 an den jeweiligen hinteren Knotenelementen 28 des Hilfsrahmens 14 angeordnet.

Die vorderen Aggregatelager 36, 38 sind asymmetrisch am vorderen Querträger 24 beabstandet zueinander angeordnet, wobei die jeweiligen Lagerachsen A des ersten und zweiten Aggregatelagers 36, 38 in Fahrzeughochrichtung z und in Fahrzeuglängsrichtung x unterschiedlich zueinander angeordnet sind. Das ermöglicht, dass insbesondere das zweite Aggregatelager 38 im Vergleich zu einer herkömmlichen Aggregatelagerung möglichst nah am Anbindungspunkt des Antriebsaggregats 12 positionert ist. Hierdurch ist eine erhöhte Anbindungssteifigkeit der Lagerstelle gewährleistet, wodurch die zwischengeschaltete Aggregatestütze 46 mit einer geringeren Hebelarmlänge und folglich einem geringeren Gewicht ausgebildet sein kann.

## Patentansprüche

1. Aggregatelagerung (10) für ein elektrisches Kraftfahrzeug, wobei die Aggregatelagerung (10) ein Antriebsaggregat (12), einen Hilfsrahmen (14), erste und zweite Aggregatelager (34, 36, 35, 38) sowie Aggregatstützen (40, 46, 48) umfasst, wobei zumindest ein erstes Aggregatelager (34, 36) sowie ein zweites Aggregatelager (35, 38) in Fahrzeugquerrichtung (y) beabstandet zueinander an einem Hilfsrahmen (14) angeordnet sind, und die Aggregatelager (34, 35, 36, 38) das Antriebsaggregat (12) jeweils über eine Aggregatestütze (40, 46, 48) abstützen, wobei
das erste Aggregatelager (34, 36) und das zweite Aggregatelager (35, 38) asymmetrisch, in Fahrzeughochrichtung (z) sowie in Fahrzeuglängsrichtung (z) zueinander versetzt an einem Querträger (24, 30) des Hilfsrahmens (14) angeordnet sind,
**dadurch gekennzeichnet, dass**
das asymmetrische erste und zweite Aggregatelager (36, 38) jeweils eine Lagerachse (A) aufweist, wobei die jeweiligen Lagerachsen (A) in Fahrzeughochrichtung (z) sowie in Fahrzeuglängsrichtung (x), ausgehend von einem beliebigen zentralen Punkt, versetzt zueinander angeordnet sind, und wobei der Querträger (24, 30) eine erste Lageraufnahme (32, 42) sowie eine zweite Lageraufnahme (33, 44) zur jeweiligen Aufnahme des asymmetrischen ersten Aggregatelagers (34, 36) und zweiten Aggregatelagers (35, 38) aufweist und die erste Lageraufnahme (32, 42) und die zweite Lageraufnahme (33, 44) jeweils an den Endbereichen des Querträgers (24, 30) angeordnet sind.

2. Aggregatelagerung nach Anspruch 1,
**dadurch gekennzeichnet, dass**
das asymmetrische erste und zweite Aggregatelager (36, 38) in Fahrzeuglängsrichtung (x) am vorderen Querträger (24) des Hilfsrahmens (14) angeordnet sind.

3. Aggregatelagerung nach Anspruch 1,
**dadurch gekennzeichnet, dass**
das asymmetrische erste und zweite Aggregatelager (34, 35) in Fahrzeuglängsrichtung (x) am hinteren Querträger (30) des Hilfsrahmens (14) angeordnet sind.

4. Aggregatelagerung nach Anspruch 3,
**dadurch gekennzeichnet, dass**
das Antriebsaggregat (12) über zwei hintere Aggregatelager (34, 35) an einem hinteren Querträger (30) und/oder an hinteren Knotenelementen (28) des Hilfsrahmens (14) abgestützt ist.

5. Aggregatelagerung nach Anspruch 4,
**dadurch gekennzeichnet, dass**
der hintere Querträger (30) und/oder die hinteren Knotenelemente (28) des Hilfsrahmens (14) Lageraufnahmen (32, 33) zur jeweiligen Aufnahme der hinteren Aggregatelager (34, 35) aufweisen.

6. Aggregatelagerung nach Anspruch 2,
**dadurch gekennzeichnet, dass**
das Antriebsaggregat (12) über zwei vordere Aggregatelager (36, 38) an einem vorderen Querträger (24) und/oder an vorderen Knotenelementen (22) des Hilfsrahmens (14) abgestützt ist.

7. Aggregatelagerung nach Anspruch 6,
**dadurch gekennzeichnet, dass**
der vordere Querträger (24) und/oder die vorderen Knotenelemente (22) des Hilfsrahmens (14) Lageraufnahmen (42, 44) zur Aufnahme der vorderen Aggregatelager (36, 38) aufweisen.

8. Aggregatelagerung nach einem der vorgenannten Ansprüche,
**dadurch gekennzeichnet, dass**
die Lageraufnahmen (32, 33, 42, 44) einteilig mit dem Hilfsrahmen (14) ausgebildet sind.

9. Aggregatelagerung nach einem der Ansprüche 1 bis 7,
**dadurch gekennzeichnet, dass**
die Lageraufnahmen (32, 33, 42, 44) als auf dem Hilfsrahmen (14) vormontierte Einzelteile ausgebildet sind.

## Claims

1. Unit mounting (10) for an electric vehicle, wherein the unit mounting (10) comprises a drive unit (12), a subframe (14), first and second unit bearings (34, 36, 35, 38) and unit supports (40, 46, 48), wherein at least one first unit bearing (34, 36) and one second unit bearing (35, 38) are arranged on a subframe (14) so as to be spaced apart from one another in vehicle transverse direction (y), and the unit bearings (34, 35, 36, 38) each support the drive unit (12) by means of a unit support (40, 46, 48), wherein
the first unit bearing (34, 36) and the second unit bearing (35, 38) are arranged on a transverse beam (24, 30) of the subframe (14) asymmetrically, offset relative to one another in vehicle vertical direction (z) and in vehicle longitudinal direction (x), **characterised in that**
the asymmetrical first and second unit bearing (36, 38) each have a bearing axis (A), wherein the respective bearing axes (A) are arranged offset relative to one another in vehicle vertical direction (z) and in vehicle longitudinal direction (x), starting from any central point, and wherein the transverse beam (24, 30) has a first bearing mount (32, 42) and a second bearing mount (33, 44) for respectively mounting the asymmetrical first unit bearing (34, 36) and second unit bearing (35, 38) and the first bearing mount (32, 42) and the second bearing mount (33, 44) are arranged respectively at the end regions of the transverse beam (24, 30).

2. Unit mounting according to claim 1,
**characterised in that**
the asymmetrical first and second unit bearings (36, 38) are arranged in vehicle longitudinal direction (x) on the front transverse beam (24) of the subframe (14).

3. Unit mounting according to claim 1,
**characterised in that**
the asymmetrical first and second unit bearings (34, 35) are arranged in vehicle longitudinal direction (x) on the rear transverse beam (30) of the subframe (14).

4. Unit mounting according to claim 3,
**characterised in that**
the drive unit (12) is supported by two rear unit bearings (34, 35) on a rear transverse beam (30) and/or on rear node elements (28) of the subframe (14).

5. Unit mounting according to claim 4,
**characterised in that**
the rear transverse beam (30) and/or the rear node elements (28) of the subframe (14) have bearing mounts (32, 33) for respectively mounting the rear unit bearings (34, 35).

6. Unit mounting according to claim 2,
**characterised in that**
the drive unit (12) is supported by two front unit bearings (36, 38) on a front transverse beam (24) and/or on front node elements (22) of the subframe (14).

7. Unit mounting according to claim 6,
**characterised in that**
the front transverse beam (24) and/or the front node elements (22) of the subframe (14) have bearing mounts (42, 44) for mounting the front unit bearings (36, 38).

8. Unit mounting according to any one of the preceding claims,
**characterised in that**
the bearing mounts (32, 33, 42, 44) are formed to be integral with the subframe (14).

9. Unit mounting according to any one of claims 1 to 7,
**characterised in that**
the bearing mounts (32, 33, 42, 44) are configured as individual parts preassembled on the subframe (14).

## Revendications

1. Système de montage d'unité sur paliers (10) pour un véhicule automobile électrique, dans lequel le système de montage d'unité sur paliers (10) comprend une unité d'entraînement (12), un faux-châssis (14), de premiers et seconds paliers d'unité (34, 36, 35, 38) ainsi que des supports d'unité (40, 46, 48), dans lequel au moins un premier palier d'unité (34, 36) ainsi qu'un second palier d'unité (35, 38) sont disposés à distance l'un de l'autre dans la direction transversale du véhicule (y) sur un châssis auxiliaire (14), et les paliers d'unité (34, 35, 36, 38) soutiennent l'unité d'entraînement (12) respectivement par l'intermédiaire d'un support d'unité (40, 46, 48), dans lequel
le premier palier d'unité (34, 36) et le second palier d'unité (35, 38) sont disposés de manière asymétrique, décalés l'un par rapport à l'autre dans la direction ascendante du véhicule (z) ainsi que dans la direction longitudinale du véhicule (z), sur une traverse (24, 30) du châssis auxiliaire (14), **caractérisé en ce que**
les premier et second paliers d'unité asymétriques (36, 38) présentent respectivement un axe de palier (A), dans lequel les axes de palier respectifs (A) sont disposés de manière décalée l'un par rapport à l'autre dans la direction ascendante du véhicule (z) ainsi que dans la direction longitudinale du véhicule (x), en partant d'un point central quelconque, et dans lequel la traverse (24, 30) présente un premier logement de palier (32, 42) ainsi qu'un second logement de palier (33, 44) pour recevoir respectivement le premier palier d'unité (34, 36) et le second palier d'unité (35, 38) asymétriques, et le premier logement de palier (32, 42) et le second logement de palier (33, 44) sont disposés respectivement sur les zones d'extrémité de la traverse (24, 30).

2. Système de montage d'unité sur paliers selon la revendication 1,
**caractérisé en ce que**
les premier et second paliers d'unité asymétriques (36, 38) sont disposés dans la direction longitudinale du véhicule (x) sur la traverse avant (24) du châssis auxiliaire (14).

3. Système de montage d'unité sur paliers selon la revendication 1,
**caractérisé en ce que**
les premier et second paliers d'unité asymétriques (34, 35) sont disposés dans la direction longitudinale du véhicule (x) sur la traverse arrière (30) du châssis auxiliaire (14).

4. Système de montage d'unité sur paliers elon la revendication 3,
**caractérisé en ce que**
l'unité d'entraînement (12) est soutenu par l'intermédiaire de deux paliers d'unité arrière (34, 35) sur une traverse arrière (30) et/ou sur des éléments nodaux arrière (28) du châssis auxiliaire (14).

5. Système de montage d'unité sur paliers selon la revendication 4,
**caractérisé en ce que**
la traverse arrière (30) et/ou les éléments nodaux arrière (28) du châssis auxiliaire (14) présentent des logements de palier (32, 33) destinés à recevoir respectivement les paliers d'unité arrière (34, 35).

6. Système de montage d'unité sur paliers selon la revendication 2,
**caractérisé en ce que**
l'unité d'entraînement (12) est soutenu par l'intermédiaire de deux paliers d'unité avant (36, 38) sur une traverse avant (24) et/ou sur des éléments nodaux avant (22) du châssis auxiliaire (14).

7. Système de montage d'unité sur paliers selon la revendication 6,
**caractérisé en ce que**
la traverse avant (24) et/ou les éléments nodaux avant (22) du châssis auxiliaire (14) présentent des logements de palier (42, 44) destinés à recevoir les paliers d'unité avant (36, 38).

8. Système de montage d'unité sur paliers selon l'une quelconque des revendications précédentes,
**caractérisé en ce que**
les logements de palier (32, 33, 42, 44) sont conçus d'un seul tenant avec le châssis auxiliaire (14).

9. Système de montage d'unité sur paliers selon l'une quelconque des revendications 1 à 7,
**caractérisé en ce que**
les logements de palier (32, 33, 42, 44) sont conçus sous forme de pièces individuelles prémontées sur le châssis auxiliaire (14).
